# DEMANDE DE BREVET EUROPEEN

(11) **EP 3 514 485 A1**
(43) Date de publication de la demande: **24.07.2019**
(21) Numéro de dépôt: 19153288.6
(22) Date de dépôt: 23.01.2019
(51) Int. Cl.: G01B 11/25, G01B 11/30, G01N 21/88

(54) **SYSTEME ET PROCEDE DE DETECTION D'IMPACTS DE GRELE SUR UNE CARROSSERIE DE VEHICULE DE TRANSPORT**

(30) Priorité: 23.01.2018 FR 1850503
(71) Demandeur: Societe Albigeoise de Fabrication et Reparation Automobile - SAFRA, 81000 Albi (FR)
(72) Inventeur: LEMAIRE, Vincent, 81000 ALBI (FR)
(74) Mandataire: Argyma

(57) **Abrégé**

Un système de détection d'impacts de grêle (S) sur une carrosserie d'un véhicule de transport (V), le système de détection (S) comprenant un dispositif de détection (2) comportant au moins un organe de projection (3), en forme de U inversé, configuré pour projeter une raie lumineuse en direction de la cavité intérieure du U dont l'organe de projection (3) a la forme, une pluralité d'organes de mesure (5), chaque organe de mesure (5) comportant au moins une caméra d'acquisition, orientée en direction de la cavité intérieure, configurée pour acquérir une pluralité d'images de la projection de la raie lumineuse sur la carrosserie du véhicule de transport (V), et des moyens de déplacement (6) du dispositif de détection (2) selon un axe (X) de manière à permettre une acquisition d'une pluralité d'images selon ledit axe (X).

## Description

### DOMAINE TECHNIQUE GENERAL ET ART ANTERIEUR

La présente invention concerne le domaine de la détection d'impacts de grêle sur une carrosserie de véhicule de transport.

La grêle est une précipitation atmosphérique qui se manifeste par la chute de billes de glace, appelées grêlon, dont le diamètre peut atteindre plusieurs centimètres. Plus le diamètre d'un grêlon est important, plus l'impact du grêlon lors de son arrivée au sol est important, ce qui peut endommager des habitations ainsi que des véhicules de transport.

Lorsqu'un véhicule de transport est endommagé par la grêle, la carrosserie du véhicule de transport comporte de nombreux impacts, se présentant sous la forme de creux, ce qui affecte négativement son aspect extérieur. Pour rendre au véhicule de transport son aspect originel, on peut réparer chaque partie de la carrosserie en réalisant une opération de débosselage. Le coût d'une opération de débosselage est fonction du nombre d'impacts et de leur taille. Aussi, lorsqu'une partie de la carrosserie d'un véhicule de transport comporte un nombre trop élevé d'impacts ou des impacts de tailles importantes, il est plus avantageux de remplacer la partie de la carrosserie qui est endommagée que de la réparer.

En pratique, il est complexe de compter le nombre d'impacts et de les catégoriser en fonction de leur taille et, ce, pour chaque partie d'un véhicule de transport. De manière connue, les impacts sont comptés et catégorisés par un opérateur de manière manuelle au cours d'une inspection visuelle, ce qui rend les résultats subjectifs et différents en fonction des opérateurs. Une telle subjectivité présente un inconvénient étant donné qu'elle peut conduire à un mauvais choix économique entre une réparation et un remplacement d'une partie de la carrosserie.

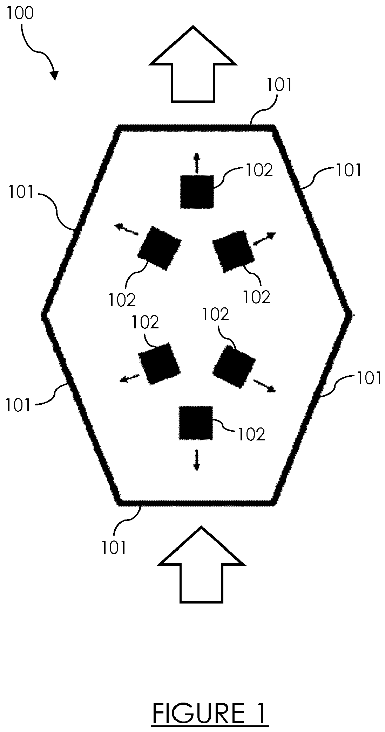

Afin de faciliter le comptage et la catégorisation des impacts de grêle par un opérateur, en référence à la figure 1, il a été proposé un système de détection automatique comportant une salle de test 100, isolée de l'éclairage extérieur, dans laquelle un véhicule de transport peut être placé. La salle de test 100 est fermée et comporte une ceinture hexagonale comportant six écrans 101. Six projecteurs 102 sont disposés au centre de la salle de test 100 afin de projeter des mires sur les écrans 101 qui sont réfléchies sur la carrosserie du véhicule pour mettre visuellement en exergue les impacts de grêle. De manière connue, une mire comporte une pluralité de raies lumineuses parallèles et régulièrement espacées. En pratique, la salle de test 100 comporte entre 10 et 20 caméras (non représentées) pour acquérir des images de la carrosserie et en déduire, par un algorithme de traitement d'images, la présence d'impacts de grêle et leur taille. Une telle solution permet de limiter la subjectivité des opérateurs mais elle demeure onéreuse compte tenu du nombre d'écrans 101, de projecteurs 102 et de caméras. En outre, l'utilisation d'une telle salle de test 100 nécessite un espace important, ce qui limite son utilisation. Enfin, du fait de sa structure complexe, une telle salle de test 100 est longue à déployer sur un nouveau site.

L'invention a donc pour but de remédier à ces inconvénients en proposant un système de détection d'impacts de grêle qui possède une structure simple et un coût de revient limité tout en permettant une détection fiable et robuste.

De manière incidente, on connait par la demande de brevet DE10 2007 013883 A1 un procédé de détection de dommages sur la carrosserie d'un véhicule automobile. Cette demande de brevet enseigne d'utilisé des scanners laser montés sur des supports mobiles par rapport à l'axe longitudinal du véhicule. Un tel scanner laser enregistre numériquement la géométrie de la surface. Un tel scanner possède un coût très élevé et ne peut pas être retenu. Un tel système impose de connaître la géométrie initiale de chaque véhicule, ce qui est contraignant.

### PRESENTATION GENERALE DE L'INVENTION

L'invention concerne un système de détection d'impacts de grêle sur une carrosserie d'un véhicule de transport, le système de détection comprenant un dispositif de détection comportant au moins un organe de projection, en forme de U inversé, configuré pour projeter une raie lumineuse en direction de la cavité intérieure du U dont l'organe de projection a la forme et une pluralité d'organes de mesure, chaque organe de mesure comportant au moins une caméra d'acquisition, orientée en direction de la cavité intérieure, configurée pour acquérir une pluralité d'images de la projection de la raie lumineuse sur la carrosserie du véhicule de transport, le système de détection comprenant des moyens de déplacement du dispositif de détection selon un axe X de manière à permettre une acquisition d'une pluralité d'images selon ledit axe X.

Grâce à l'invention, on peut obtenir une image de toute la carrosserie d'un véhicule de transport par déplacement de l'organe de projection et des organes de mesure afin de former une image qui comporte une pluralité de raies lumineuses qui facilitent la détection d'impacts de grêle. Contrairement à l'art antérieur qui proposait de projeter des mires avec des moyens techniques complexes, la présente invention propose une pluralité d'acquisitions élémentaires au cours de temps, ce qui requiert moins de matériel. De plus, comme les organes de mesure sont mobiles le long de la carrosserie, les images obtenues de chaque partie de la carrosserie sont homogènes entre elles, ce qui améliore la fiabilité. De manière avantageuse, le système de détection possède un encombrement limité et peut être mis en place de manière rapide et pratique lorsqu'un orage de grêle survient dans un lieu donné. Le système de détection est ainsi parfaitement adapté à une utilisation nomade.

De préférence, le système de détection comporte des moyens de traitement desdites images de la projection de la raie lumineuse sur la carrosserie du véhicule de transport de manière à détecter des impacts de grêle.

De préférence, le dispositif de détection comporte un unique organe de projection. Le coût de fabrication et de maintenance du système de détection est ainsi limité. On tire ainsi avantage du déplacement d'une unique raie lumineuse pour simuler la projection d'une mire comportant une pluralité de raies lumineuses.

De manière préférée, le dispositif de détection comporte au moins un organe d'occultation, en forme de U inversé, configuré pour isoler la projection de la raie lumineuse de l'éclairage extérieur. De manière avantageuse, il suffit d'un simple organe d'occultation pour limiter l'influence de l'éclairage extérieur. Cela est plus avantageux que l'art antérieur qui nécessitait une salle de test entièrement isolée de l'éclairage extérieur. De préférence, l'organe d'occultation s'étend en avant et en arrière de l'organe de projection. De manière préférée, la largeur de l'organe d'occultation est comprise entre 1m et 5m, de préférence, de l'ordre de 3m.

De préférence, chaque organe de mesure comporte au moins un capteur de distance, de préférence plusieurs capteurs de distance, afin de mesurer la distance entre l'organe de mesure et la carrosserie du véhicule de transport. L'utilisation d'un capteur de distance permet avantageusement de corriger les images réelles acquises par la caméra afin de faciliter la détection d'impacts de grêle. De plus, comme les capteurs de distance sont déplacés, on obtient des mesures homogènes pour chaque partie de la carrosserie.

Selon un aspect préféré, chaque organe de mesure comporte au moins un calculateur configuré pour calculer une image projetée à partir d'une image réelle acquise par la caméra d'acquisition et de la distance mesurée par le capteur de distance. De manière avantageuse, chaque organe de mesure corrige localement les images acquises, ce qui permet de distribuer la puissance de traitement parmi les organes de mesure et accélère la détection d'impacts de grêle.

De préférence, le système de détection comporte un dispositif de gestion configuré pour former une image synthétisée à partir des images obtenues des différents organes de mesure, de la distance entre lesdits organes de mesure et d'une vitesse d'avancement du dispositif de détection. Autrement dit, le dispositif de gestion permet de former une image globale à partir d'une pluralité d'images élémentaires qui ont été calculées localement, l'image synthétisée comportant une pluralité de raies lumineuses adjacentes mettant en exergue les impacts de grêle.

De manière préférée, le dispositif de gestion est configuré pour réaliser une détection d'impacts de grêle dans ladite image synthétisée par un procédé de traitement d'image, en particulier, par seuillage et filtrage.

Selon un aspect préféré, le système de détection comprend un châssis de support et le dispositif de détection est suspendu au châssis de support. Ainsi, le dispositif de détection est guidé en hauteur, ce qui permet de limiter l'encombrement au sol. Cela est particulièrement avantageux pour une utilisation nomade au cours de laquelle le système de détection peut être installé aussi bien dans un parking que dans un terrain recouvert de terre.

L'invention concerne en outre un procédé de détection d'impacts de grêle sur une carrosserie d'un véhicule de transport au moyen d'un système de détection tel que présenté précédemment, le procédé comporte :
- une étape d'activation de l'organe de projection de manière à projeter une raie lumineuse sur la partie du véhicule de transport située sous le dispositif de détection,
- une étape d'activation des organes de mesure du dispositif de détection de manière à acquérir des images de la partie du véhicule de transport située sous le dispositif de détection,
- une étape de déplacement du dispositif de détection selon un axe X au-dessus du véhicule de transport de manière à former au moins une image synthétisée comportant une pluralité de raies lumineuses et
- une étape de détection d'impacts de grêle dans ladite image synthétisée par un procédé de traitement d'image.

Grâce à l'invention, on tire avantage du déplacement de l'organe de projection pour simuler une mire comprenant une pluralité de raies lumineuses. De manière avantageuse, à la manière d'un portique de lavage automatique d'un véhicule de transport, le dispositif de détection est déplacé au-dessus du véhicule de transport pour obtenir une image synthétisée. Le nombre et la taille d'impacts de grêle peuvent être obtenus de manière rapide et fiable.

De manière préférée, chaque organe de mesure comporte au moins une caméra d'acquisition configurée pour acquérir une images réelle et au moins un capteur de distance configuré pour mesurer la distance entre l'organe de mesure et la carrosserie du véhicule de transport, chaque organe de mesure est configuré pour former une image projetée à partir de ladite image réelle et de ladite distance. L'image synthétisée est formée à partir des images projetées.

La mesure de la distance permet de corriger les images réelles de manière optimale étant donné que la correction est réalisée de manière locale au plus près de la carrosserie. On obtient ainsi une mesure précise de la déformation de la raie lumineuse en chaque zone élémentaire de la carrosserie, ce qui permet une détection optimale des impacts et, par voie de conséquence, une meilleure catégorisation des impacts.

### PRESENTATION DES FIGURES

L'invention sera mieux comprise à la lecture de la description qui va suivre, donnée uniquement à titre d'exemple, et se référant aux dessins annexés sur lesquels :
- la figure 1 est une représentation schématique du dessus d'un système de détection selon l'art antérieur comportant une pluralité de projecteurs fixes et une pluralité de caméras fixes,
- la figure 2 est une représentation schématique d'un système de détection selon une forme de réalisation de l'invention,
- la figure 3 est une représentation schématique du dispositif de détection de la figure 2,
- la figure 4 est une représentation schématique d'un organe de mesure du dispositif de détection,
- la figure 5 est une représentation schématique de la formation d'une image projetée à partir d'une image réelle et
- la figure 6 est une représentation schématique d'une image synthétisée et d'une image synthétisée traitée pour détecter des impacts de grêle.

Il faut noter que les figures exposent l'invention de manière détaillée pour mettre en oeuvre l'invention, lesdites figures pouvant bien entendu servir à mieux définir l'invention le cas échéant.

### DESCRIPTION D'UN OU PLUSIEURS MODES DE REALISATION ET DE MISE EN OEUVRE

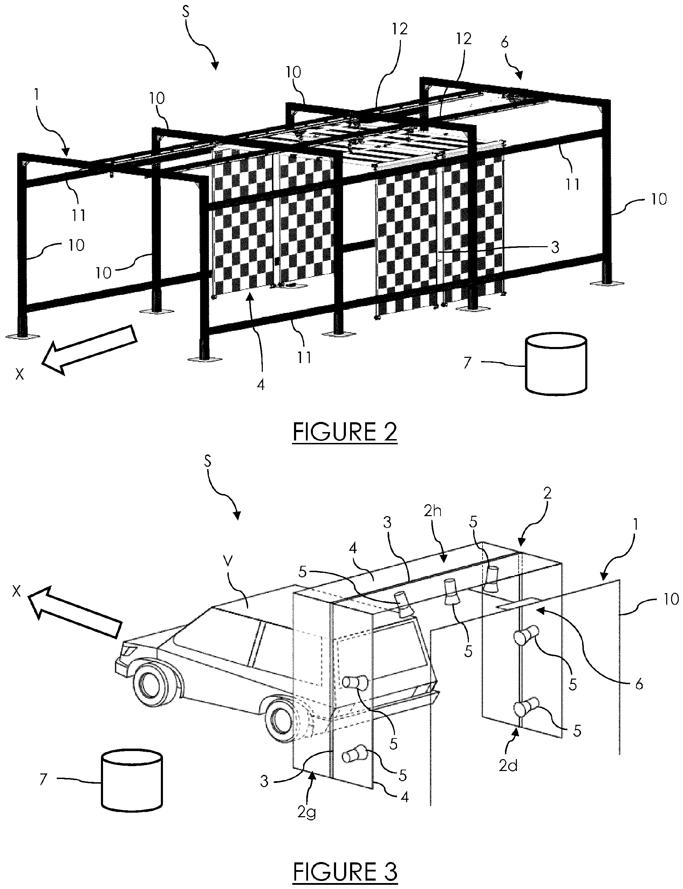

L'invention va être dorénavant décrite en référence aux figures 2 et 3 présentant un système de détection d'impacts de grêle S sur un véhicule de transport V, notamment un véhicule automobile.

Selon l'invention, le système de détection S comprend un châssis de support 1, un dispositif de détection 2 et des moyens de déplacement 6 du dispositif de détection 2 pour permettre une acquisition d'images à différentes positions longitudinales du véhicule de transport V qui doit être analysé.

Comme illustré à la figure 2, le châssis 1 s'étend longitudinalement selon un axe X orienté d'arrière en avant sur la figure 2. Dans cet exemple, le châssis de support 1 possède une forme de tunnel et possède une section transversale en U inversé. A titre d'exemple, le châssis 1 possède une longueur comprise entre 8 m et 10 m, une largeur comprise entre 280 cm et 380 cm et une hauteur comprise entre 240 cm et 300 cm.

Le châssis de support 1 possède une structure tubulaire de manière à faciliter son montage/démontage, ce qui rend pratique son utilisation de manière nomade. Dans cet exemple, le châssis de support 1 comporte une pluralité d'arches 10 (ici au nombre de quatre) qui sont reliées par des longerons longitudinaux 11. Les arches 10 s'étendent dans un plan transversal à l'axe X tandis que les longerons longitudinaux 11 s'étendent parallèlement à l'axe X.

De manière préférée, en référence à la figure 2, le châssis 1 comporte deux tubes supérieurs de guidage 12 du dispositif de détection 2. Les tubes de guidage 12 sont creux pour permettre l'insertion d'un organe de guidage du dispositif de détection 2, en particulier, équipé de roulettes de guidage. Néanmoins, il va de soi que les moyens de guidage pourraient être différents.

Il va de soi que le châssis de support 1 pourrait se présenter sous une forme différente, notamment, sous la forme de rails longitudinaux positionnés au sol pour guider le dispositif de détection 2.

En référence aux figures 2 et 3, le système de détection S comporte un dispositif de détection 2 comportant un unique organe de projection 3 et une pluralité d'organes de mesure 5 qui vont être dorénavant présentés.

Dans cet exemple, en référence à la figure 3, le dispositif de détection 2 possède une forme de U inversé définissant un segment vertical gauche 2g, un segment vertical droite 2d et un segment horizontal haut 2h. A titre d'exemple, la longueur de chaque segment vertical 2d, 2g est comprise entre 150 cm et 250 cm tandis que la longueur du segment haut 2h est comprise entre 250 cm et 350 cm.

Dans cet exemple, en référence à la figure 3, l'organe de projection 3 possède une forme de U et s'étend sur chaque segment 2g, 2d, 2h du dispositif de détection 2. L'organe de projection 3 est configuré pour projeter une raie lumineuse continue en direction de la cavité intérieure du U.

Dans cette forme de réalisation, l'organe de projection 3 comporte une pluralité de diodes électroluminescentes alignées de manière adjacente. Néanmoins, il va de soi que d'autres éléments lumineux pourraient convenir. Des diodes électroluminescentes sont avantageuses étant donné qu'elles peuvent fournir un éclairage précis et intense, ce qui favorise la détection d'impacts. En outre, elles possèdent un coût réduit et une durée de vie importante. L'organe de projection 3 forme ainsi une sorte de guirlande en U pour projeter une raie lumineuse.

L'organe de projection 3 s'étend dans un plan transversal à l'axe X selon lequel s'étend le châssis de support 1 afin de pouvoir projeter la raie lumineuse selon un plan transversal à l'axe X. La largeur de l'organe de projection 3 est comprise entre 1 cm et 3 cm afin de former une raie lumineuse qui est fine, ce qui facilite la détection d'impacts.

Il va de soi que le dispositif de détection 2 pourrait comprendre plusieurs organes de projection 3 parallèles les uns autres et alignés selon l'axe X. Néanmoins, l'utilisation d'un unique organe de projection 3 est économique et permet de limiter la complexité du dispositif de détection 2.

Dans cet exemple, en référence aux figures 2 et 3, le dispositif de détection 2 comporte en outre un organe d'occultation 4 de l'éclairage extérieure se présentant en forme de U inversé. L'organe de projection 3 est monté intérieurement à l'organe d'occultation 4 de manière à ce que la raie lumineuse émise par l'organe de projection 3 ne soit pas perturbée par l'éclairage extérieur.

La largeur de l'organe d'occultation 4 est comprise entre 1 m et 5 m, de préférence 3 m, de manière à assurer une occultation optimale tout en ayant des dimensions et une masse réduite. De préférence, l'organe de projection 3 s'étend sensiblement à égale distance du bord arrière et du bord avant de l'organe d'occultation 4 de manière à limiter l'impact de l'environnement aussi bien en avant qu'en arrière de l'organe de projection 3.

L'organe d'occultation 4 est réalisé dans un matériau occultant et léger, en particulier, une toile de couleur noire ou opaque, de préférence, en matière PVC.

Selon un aspect particulier de l'invention, l'organe d'occultation 4 comporte un module avant et un module arrière qui sont assemblés ensemble, l'organe de projection 3 étant monté à l'interface entre les deux modules. Une telle conception modulaire permet de faciliter le montage du dispositif de détection 2.

Afin de détecter des impacts sur la carrosserie d'un véhicule de transport, le dispositif de détection 2 comporte une pluralité d'organes de mesure 5. Dans cet exemple de mise en oeuvre, en référence à la figure 3, le dispositif de détection 2 comporte 7 organes de mesure 5, en particulier, deux sur chaque segment latéral 2d, 2g et trois sur le segment supérieur 2h du dispositif de détection 2. A titre d'exemple, les organes de mesure 5 sur les segments latéraux 2d, 2g sont situés à une hauteur de 70cm et 140 cm par rapport au sol. Deux organes de mesure 5 sont situés à 90 cm des extrémités du segment supérieur 2h tandis que le troisième organe de mesure 5 est centré.

Il va de soi que le nombre d'organes de mesure 5 pourrait être différent. Les organes de mesure 5 sont répartis à la périphérie du dispositif de détection 2 de manière à permettre d'acquérir de manière optimale des images de la carrosserie pour une section transversale donnée.

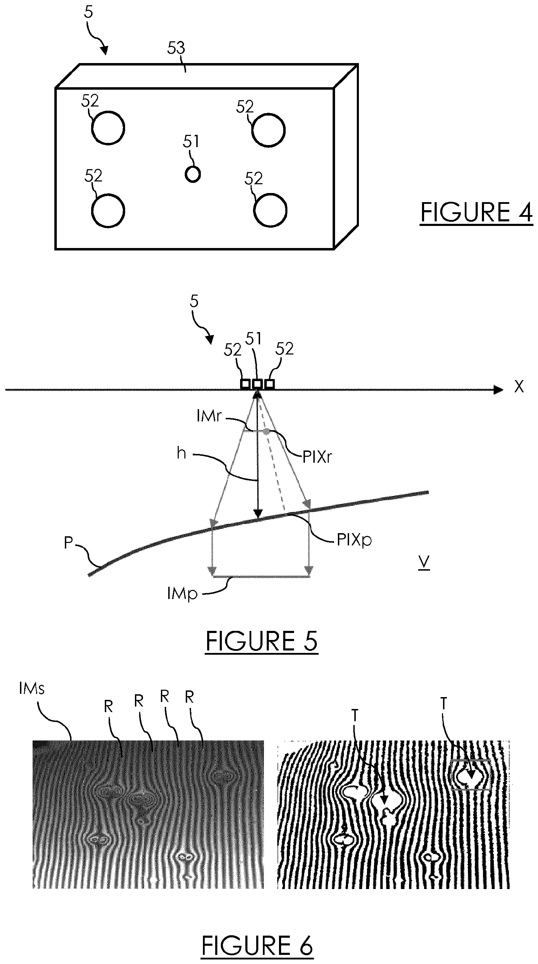

Un organe de mesure 5 est représenté de manière schématique à la figure 4. Selon l'invention, chaque organe de mesure 5 comporte une unique caméra d'acquisition 51 qui est orientée en direction de la cavité intérieure, dans le plan transversal à l'axe X, et qui est configurée pour acquérir une pluralité d'images de la raie lumineuse sur la carrosserie du véhicule. La caméra d'acquisition 51 est, de préférence, une caméra haute définition et permet une acquisition d'une image d'une portion élémentaire de la carrosserie sur laquelle est projetée la raie lumineuse.

L'organe de mesure 5 comporte en outre plusieurs capteurs de distance 52 qui sont configurés pour mesurer la distance entre le capteur de distance 52 et la carrosserie du véhicule dans le plan transversal à l'axe X. Dans cet exemple, en référence à la figure 5, l'organe de mesure 5 comporte quatre capteurs de distance 52 situés à proximité les uns des autres, à une distance inférieure à 10 cm, de manière à permettre de mesurer le profil d'une portion élémentaire de la carrosserie. De préférence, la caméra d'acquisition 51 est située entre les capteurs de distance 52 afin que les images soient associées à une mesure précise de la distance. Dans cette forme de réalisation, chaque capteur de distance 52 se présente sous la forme d'un capteur à ultrasons mais il va de soi que d'autres types de capteur de distance pourraient convenir.

De manière préférée, en référence à la figure 3, les organes de mesure 5 sont positionnés en arrière de l'organe de projection 3. Ainsi, les organes de mesure 5 ne perturbent pas l'organe de projection 3 lorsque le dispositif de détection 2 est déplacé selon l'axe X vers l'avant. Les organes de mesure 5 sont suffisamment proches de l'organe de projection 3 pour permettre l'acquisition d'images au droit de la raie lumineuse. La distance entre les organes de mesure 5 et l'organe de projection 3 est inférieure à 30 cm, de préférence, 20 cm afin de mesurer le profil de manière précise au droit de la raie lumineuse. La caméra d'acquisition 51 et les capteurs de distance 52 réalisent des mesures selon des axes de mesure qui sont parallèles entre eux.

Le système de détection comporte des moyens de traitement des images obtenues par la caméra. Dans cette forme de réalisation, chaque organe de mesure 3 comporte un calculateur 53 qui est configuré pour, d'une part, activer l'acquisition d'images par la caméra d'acquisition 51 et, d'autre part, activer les capteurs de distance 52. Le calculateur 53 appartient aux moyens de traitement d'images.

Le calculateur 53 est configuré pour traiter les données obtenues par la caméra d'acquisition 51, en particulier, pour mettre en oeuvre des algorithmes de traitement d'images. Le calculateur 53 est également configuré pour traiter les données obtenues par les capteurs de distance 52 afin de mesurer le profil tridimensionnel de la carrosserie. Le calculateur 53 se présente sous la forme d'une unité informatique connue par exemple sous la désignation commerciale Raspberry Pi © qui est configuré pour fonctionner comme un serveur autonome afin de communiquer sur un réseau informatique déterminé.

Les organes de mesure 5 sont disposés de manière à assurer un recouvrement des images acquises entre deux organes de mesure 5 adjacents. Autrement dit, la pluralité d'organes de mesure 5 permet d'obtenir une section longitudinale élémentaire de la carrosserie du véhicule V comme cela sera présenté par la suite.

En référence aux figures 2 et 3, pour permettre une acquisition d'une pluralité de sections longitudinales élémentaires de la carrosserie du véhicule V selon la direction longitudinale X, le système de détection S comporte des moyens de déplacement 6 du dispositif de détection 2 par rapport au châssis de support 1 pour le translater selon l'axe X.

Dans cette forme de réalisation, en référence à la figure 3, les moyens de déplacement 6 comportent un premier enrouleur motorisé comportant un câble relié au dispositif de détection 2 afin de l'entraîner d'avant en arrière selon l'axe X et un deuxième enrouleur motorisé comportant un câble relié au dispositif de détection 2 via une poulie de renvoi afin de l'entraîner d'arrière en avant selon l'axe X. L'utilisation d'enrouleurs motorisés est particulièrement économique et pratique. Dans cet exemple, les deux enrouleurs sont placés l'un à côté de l'autre et fixés à une arche arrière 10 tandis que la poulie de renvoi est fixée à une arche avant 10. L'utilisation d'une poulie située à l'avant du châssis de support 1 permet de tirer le dispositif de détection 2 avec le deuxième enrouleur tout en permettant son positionnement à côté du premier enrouleur. Cela facilite la mise en place des moyens de déplacement 6 et leur maintenance. Par enrouleur motorisé, on entend un moteur associé à un câble.

Le dispositif de détection 2 comporte des moyens de guidage (non représentés) avec le châssis de support 1. Dans cet exemple de réalisation, le dispositif de détection 2 comporte une ossature sur laquelle sont montés l'organe de projection 3, l'organe d'occultation 4 et les organes de mesure 5, l'ossature comportant des roulettes adaptées pour coopérer avec les tubes de guidage 12 du châssis de support 1. Ainsi, le dispositif de détection 2 est avantageusement suspendu et guidé.

En référence aux figures 2 et 3, le système de détection S comporte en outre un dispositif de gestion 7 configuré pour communiquer avec les organes de mesure 5, en particulier, via un réseau informatique, de préférence, sans fil.

Dans une forme de réalisation préférée, le dispositif de gestion 7 se présente sous la forme d'une unité centrale qui permet de collecter les images traitées de chaque organe de mesure 5 et former un rapport de synthèse dans lequel les impacts de grêle sont identifiés et catégorisés.

Le dispositif de gestion 7 est relié informatiquement aux moyens de déplacement 6, aux organes de mesure 5 et à l'organe de projection 3 et permet la coopération des éléments entre eux de manière à permettre une acquisition d'un profil de la carrosserie du véhicule de transport V qui met en valeur les impacts de grêle. Le dispositif de gestion 7 appartient aux moyens de traitement d'images.

Dans cet exemple, chaque organe de mesure 5 met en oeuvre un traitement élémentaire dans lequel, au cours du déplacement longitudinal du dispositif de détection 2, des images sont acquises ainsi que des mesures de distances associées auxdites images.

En référence à la figure 5, il est représenté un organe de mesure 5 dont la caméra d'acquisition 51 réalise l'acquisition d'une image réelle IMr et dont les capteurs de distance 52 mesurent la distance h par rapport au profil P du véhicule de transport V.

Grâce à ces informations, le calculateur 53 de l'organe de mesure 5 calcule une image projetée IMp du profil P dans lequel chaque pixel PIXr de l'image réelle IMr est déplacé pour former un pixel PIXp de l'image projetée IMp en fonction de la distance h mesurée. La projection est réalisée dans un plan transversal à l'axe de mesure de l'organe de mesure 5. Une image projetée IMp est avantageuse car elle permet d'avoir un rapport pixel sur distance h qui est constant.

En pratique, pour créer l'image projetée IMp à partie de l'image réelle IMr, on réalise une étape de maillage de l'image réelle, c'est-à-dire, une sélection de points élémentaires sur l'image réelle IMr, puis on calcule la projection de ces points élémentaires dans l'image projetée IMp. Enfin, on applique un algorithme de distorsion sur l'image réelle IMr afin d'obtenir une image projetée IMp qui corresponde avec les points élémentaires projetés qui ont été précédemment calculés. Autrement dit, on détermine l'algorithme de distorsion qui minimise l'erreur de projection des points élémentaires. Le calcul des images projetées IMp est réalisé localement par chaque organe de mesure 5, ce qui permet de distribuer et répartir les efforts de calculs, ce qui est avantageux. Le dispositif de gestion 7 peut ainsi posséder une puissance réduite.

Un tel traitement des images permet d'obtenir des images projetées qui sont de qualité et optimales pour réaliser une détection d'impacts.

Comme indiqué précédemment, l'organe de projection 3 projette une raie lumineuse sur la carrosserie. Aussi, chaque image projetée IMp comporte la raie lumineuse qui est déformée par les impacts.

Ainsi, au cours du déplacement longitudinal du dispositif de détection 2, chaque organe de mesure 5 permet d'acquérir une pluralité d'images projetée IMp qui comportent chacune la raie lumineuse. Le calculateur 53 de chaque organe de mesure 5 permet d'associer des images projetées IMp ensemble afin de former une image fusionnée qui représente une bande longitudinale du profil P du véhicule de transport V. En effet, chaque organe de mesure 5 ne balaye qu'une partie du véhicule de transport V. De manière avantageuse, l'image fusionnée comporte une pluralité de raies lumineuses qui sont adjacentes et qui sont issues de chaque image projetée. Ainsi, avec un simple organe de projection 3, on simule la projection d'une pluralité de raies lumineuses comme cela était réalisé dans l'art antérieur avec des moyens techniques complexes et onéreux. La formation d'une image fusionnée est réalisée en superposant les pixels des images projetées avec un décalage qui est fonction de la vitesse de déplacement du dispositif de détection 2.

Ensuite, les images fusionnées de chaque organe de mesure 5 sont transmises au dispositif de gestion 7 qui permet de former une image synthétisée à partir des images fusionnées de l'ensemble des organes de mesure 5. De manière analogue à précédemment, la formation de l'image synthétisée est réalisée en superposant les pixels des images fusionnées avec un décalage qui est fonction de la position relative des organes de mesure 5 entre eux. L'image synthétisée obtenue représente une vue projetée du profil complet P du véhicule de transport V.

De manière alternative, le dispositif de gestion 7 pourrait réaliser l'image synthétisée directement à partir des images projetées de chaque organe de mesure 5.

En référence à la figure 6, il est représenté une étape de traitement de l'image synthétisée IMs de manière à déterminer des impacts de grêle. A titre d'exemple, une étape de seuillage permet d'isoler les raies lumineuses R et les points lumineux au centre des cônes qui correspondent aux impacts de grêle T. Les points lumineux sont détectés puis filtrés en fonction de critères d'aire et de forme. Une telle étape de filtre permet, d'une part, de supprimer les fausses détections et, d'autre part, de classifier les impacts de grêle T par taille. Les impacts de grêle T sont ensuite ajoutés sur l'mage synthétisée IMs pour permettre à un opérateur de les visualiser.

Selon un aspect préféré, on réalise une étape de détourage des parties de la carrosserie, de manière manuelle ou automatique, afin de déterminer le nombre et la taille des impacts de grêle T pour chacune des parties détourées. Ainsi, on détermine de manière objective et rapide si une partie de la carrosserie doit être réparée ou remplacée.

Un exemple de mise en oeuvre de l'invention va dorénavant être présenté. Tout d'abord, à la manière d'un système de lavage automatique, un véhicule de transport V se place sous le châssis de support 1. En début de cycle, le dispositif de détection 2 est situé à l'extrémité arrière du châssis de support 1.

Puis, l'opérateur active le dispositif de gestion 7 pour commander l'activation de l'organe de projection 3, des organes de mesure 5 ainsi que le déplacement du dispositif de détection 2 vers l'avant grâce aux moyens de déplacement 6.

Les diodes de l'organe de projection 3 s'illuminent et une raie lumineuse se projette sur la carrosserie du véhicule de transport, aussi bien sur son toit que sur les flancs. Pour chaque organe de mesure 5, la caméra 51 ainsi que les capteurs de distance 52 permettent d'obtenir une image projetée, qui dépend du profil mesuré, sur laquelle la raie lumineuse est visible et déformée par la présence d'impacts de grêle.

Au fur et à mesure de l'avancement du dispositif de détection 2 guidé sur le châssis de support 1, les organes de mesure 5 réalisent une acquisition d'une pluralité d'images projetées IMp. Ensuite, le dispositif de gestion 7 envoie une requête aux différents organes de mesure 5 afin d'obtenir les images projetées afin de former une image synthétisée comportant une pluralité de raies lumineuses. Le nombre et la taille des impacts de grêle peuvent être répertoriés.

Grâce au rapport de synthèse, le coût de réparation de chaque partie de la carrosserie peut être évalué de manière précise et fiable. L'opérateur dispose ainsi d'une donnée objective sur l'intérêt de réparer ou de remplacer une partie de la carrosserie.

Le système de détection S selon l'invention est particulièrement avantageux. Tout d'abord, sa structure simple et modulaire autorise une utilisation nomade, ce qui permet une mise en place au plus près du lieu dans lequel est survenu un orage de grêle.

L'utilisation d'un dispositif de détection 2 qui est mobile permet d'éviter l'utilisation d'une salle de test fermée comme dans l'art antérieur. L'utilisation d'une pluralité d'organes de mesure permet de distribuer la puissance de traitement et ainsi réaliser une détection rapide. En outre, du point de vue de la maintenance, un organe de mesure 5 peut être remplacé de manière rapide et pratique en cas de besoin, les organes de mesure 5 étant indépendants les uns des autres. Comme les organes de mesure 5 se déplacent par rapport au véhicule V, chaque partie du véhicule V est traitée de manière identique, ce qui évite le risque d'erreur de détection par comparaison à l'art antérieur.

De plus, comme les organes de mesure 5 permettent de réaliser des mesures du profil à distance du véhicule de transport V, le système de détection S est capable de détecter des impacts sur tout type de véhicule de transport V, par exemple, une petite citadine comme un gros véhicule tout-terrain.

## Revendications

1. Système de détection d'impacts de grêle (S) sur une carrosserie d'un véhicule de transport (V), le système de détection (S) comprenant un dispositif de détection (2) comportant au moins un organe de projection (3), en forme de U inversé, configuré pour projeter une raie lumineuse (R) en direction de la cavité intérieure du U dont l'organe de projection (3) a la forme et une pluralité d'organes de mesure (5), chaque organe de mesure (5) comportant au moins une caméra d'acquisition (51), orientée en direction de la cavité intérieure, configurée pour acquérir une pluralité d'images de la projection de la raie lumineuse (R) sur la carrosserie du véhicule de transport (V), le système de détection comprenant des moyens de déplacement (6) du dispositif de détection(2) selon un axe X de manière à permettre une acquisition d'une pluralité d'images selon ledit axe X et des moyens de traitement desdites images de la projection de la raie lumineuse (R) sur la carrosserie de manière à détecter des impacts de grêle (S).

2. Système de détection de grêle (S) selon la revendication 1, dans lequel le dispositif de détection (2) comporte un unique organe de projection (3).

3. Système de détection de grêle (S) selon l'une des revendications 1 à 2, dans lequel le dispositif de détection (2) comporte au moins un organe d'occultation (4), en forme de U inversé configuré pour isoler la projection de la raie lumineuse de l'éclairage extérieur.

4. Système de détection de grêle (S) selon l'une des revendications 1 à 3, dans lequel chaque organe de mesure (5) comporte au moins un capteur de distance (52), de préférence plusieurs capteurs de distance (52), afin de mesurer la distance (h) entre l'organe de mesure (5) et la carrosserie du véhicule de transport (V).

5. Système de détection de grêle (S) selon la revendication 4, dans lequel chaque organe de mesure (5) comporte au moins un calculateur (53) configuré pour calculer une image projetée (IMp) à partir d'une image réelle (IMr) acquise par la caméra d'acquisition (51) et de la distance (h) mesurée par le capteur de distance (52).

6. Système de détection de grêle (S) selon l'une des revendications 1 à 5, dans lequel le système de détection (S) comporte un dispositif de gestion (7) configuré pour former une image synthétisée (IMs) à partir des images obtenues des différents organes de mesure (5), de la distance entre lesdits organes de mesure (5) et d'une vitesse d'avancement du dispositif de détection (2).

7. Système de détection de grêle (S) selon la revendication 6, dans lequel le dispositif de gestion (7) est configuré pour réaliser une détection d'impacts de grêle dans ladite image synthétisée (IMs) par un procédé de traitement d'image.

8. Système de détection de grêle (S) selon l'une des revendications 1 à 7, comprenant un châssis de support (1), le dispositif de détection (2) étant suspendu au châssis de support (1).

9. Procédé de détection d'impacts de grêle sur une carrosserie d'un véhicule de transport (V) au moyen d'un système de détection (S) selon l'une des revendications 1 à 8, le procédé comporte :
- une étape d'activation de l'organe de projection (3) de manière à projeter une raie lumineuse (R) sur la partie du véhicule de transport (V) située sous le dispositif de détection (2),
- une étape d'activation des organes de mesure (5) du dispositif de détection (2) de manière à acquérir des images de la partie du véhicule de transport (V) située sous le dispositif de détection (2),
- une étape de déplacement du dispositif de détection (2) selon un axe X au-dessus du véhicule de transport (V) de manière à former au moins une image synthétisée (IMs) comportant une pluralité de raies lumineuses (R) et
- une étape de détection d'impacts de grêle dans ladite image synthétisée (IMs) par un procédé de traitement d'image.

10. Procédé de détection selon la revendication 9, dans lequel chaque organe de mesure (5) comportant au moins une caméra d'acquisition (51) configurée pour acquérir une images réelle (IMr) et au moins un capteur de distance (52) configuré pour mesurer la distance (h) entre l'organe de mesure (3) et la carrosserie du véhicule de transport (V), chaque organe de mesure (5) est configuré pour former une image projetée (IMp) à partir de ladite image réelle (IMr) et de ladite distance (h), l'image synthétisée (IMs) étant formée à partir desdites images projetées (IMp).
